# EUROPEAN PATENT APPLICATION

(11) **EP 3 609 173 A1**
(43) Date of publication of application: **12.02.2020**
(21) Application number: 18188016.2
(22) Date of filing: 08.08.2018
(51) Int. Cl.: H04N 5/232

(54) **METHOD AND APPARATUS FOR RECORDING AN IMAGE**

(71) Applicant: Vestel Elektronik Sanayi ve Ticaret A.S., 45030 Manisa (TR)
(72) Inventor: EREN, Burak, 45030 Manisa (TR)
(74) Representative: Flint, Adam

(57) **Abstract**

An apparatus for recording an image has a lens (301), an image sensor (302), a moving arrangement (305) and a processor (303) for selecting a final focal distance for recording an image. Images are recorded with the lens (301) and image sensor (302) at first and second focal distances. The focus quality at the first and second focal distances is determined. The focus quality at a third focal distance is determined, where the movement of the lens (301) and/or image sensor (302) to the third focal distance is dependent on the focus quality at the first and second focal distances.

## Description

### Technical Field

The present invention disclosure relates to a method and an apparatus for recording an image

### Background

Cameras are widely used by many people, especially as a part of smartphones and tablets. Although the structure and size of the cameras have been changing, it is always a matter of gathering the light through a lens in a reasonable amount and way, and reflecting or directing the light that is received by the lens onto a light sensitive arrangement, such as one or more image sensors. It is especially important to be able to provide camera systems that are small and yet are capable of recording images effectively.

In common camera systems, the lens gathers the light by receiving the light rays that are provided by an object to be recorded and directs these light rays onto an image sensor for recording the image. The light rays emitted by the object in every direction are constantly diverging. The lens receives such diverging light rays and it should converge or focus these rays onto the image sensor in a way that the image of the object is created substantially the same on the image sensor for proper focussing.

Proper convergence or focussing of the lens is arranged by moving the lens between the image sensor and the object. The lens is moved a distance relative to the object and the image sensor, such that the object is properly focused at that instance and the light coming from the object is directed to the image sensor with proper contrast and/or sharpness. Alternatively proper convergence or focussing of the lens may be arranged by moving the image sensor relative to the lens. In this example the image sensor is moved to a distance relative to the object and the lens, such that the object is correctly focused at that instance and the light coming from the object is directed to the image sensor with a certain contrast and/or sharpness.

Accordingly the image is recorded with correct focus with less blurriness by directing the light coming from the object to the image sensor through the lens at the proper focal distance.

### Summary

According to a first aspect of the present disclosure, there is provided a method for recording an image, the method comprising: recording a first image at a first focal distance, wherein the focal distance is the distance between a lens and an image sensor which captures images; recording a second image at a second focal distance, wherein the second focal distance is obtained by either increasing the focal distance from the first focal distance or decreasing the focal distance from the first focal distance; determining the focus quality at the first and second focal distances by processing at least a portion of the first image and at least a portion of the second image; and recording a third image at a third focal distance, wherein the third focal distance is obtained by: in the case that the second focal distance was obtained by increasing the focal distance from the first focal distance, increasing the focal distance from the second focal distance if the focus quality at the second focal distance is better than the focus quality at the first focal distance or decreasing the focal distance from the second focal distance if the focus quality at the second focal distance is worse than the focus quality at the first focal distance, and in the case that the second focal distance was obtained by decreasing the focal distance from the first focal distance, decreasing the focal distance from the second focal distance if the focus quality at the second focal distance is better than the focus quality at the first focal distance or increasing the focal distance from the second focal distance if the focus quality at the second focal distance is worse than the focus quality at the first focal distance.

In examples, there is provided a method and apparatus for recording an image which is able to select the focal distance for an optimal focus quality in a short time.

In an example, determining the focus quality of an image comprises processing an image feature obtained from the at least a portion of the image.

In an example, the image feature is obtained from the sharpness of the at least a portion of the image.

In an example, the sharpness of the at least a portion of the image is assigned to an image feature value.

In an example, the image feature is obtained from the contrast of the at least a portion of the image.

In an example, the contrast of the at least a portion of the image is assigned to an image feature value.

In an example, the amount of the change of the second focal distance to the third focal distance is determined as a function of the relation between the first image feature obtained from the first image and the second image feature obtained from the second image.

In an example, the amount of the change of the second focal distance to the third focal distance is determined from the ratio of the first image feature value and the second image feature value.

In an example, the amount of the change of the second focal distance to the third focal distance is determined from the difference of the first image feature value and the second image feature value.

In an example, the amount of the change of the second focal distance to the third focal distance is determined from the difference such that the more different the values are, the greater is the amount to be changed.

In an example, the relation between the first image feature and the second image feature is obtained from the difference of the first image feature and the second image feature and the difference of the first focal distance and the second focal distance.

In an example, the amount of the change of the second focal distance to the third focal distance is determined using a change amount lookup table comprising a correspondence of a plurality of relations to a plurality of focal distance change amounts.

In an example, the change amount lookup table is selected from a plurality of change amount lookup tables in response to an image mode selected for recording the image.

In an example, the amount of the change of the second focal distance to the third focal distance is greater than the amount of the change of the first focal distance to the second focal distance.

In an example, the method comprises selecting the final focal distance from any of the first focal distance, the second focal distance and the third focal distance.

In an example, the final focal distance is selected as the focal distance that has the highest focus quality.

According to a second aspect of the present disclosure, there is provided apparatus for recording an image, the apparatus comprising:
an image sensor for capturing images;
a lens for focussing incident light onto the image sensor;
a moving arrangement constructed and arranged to move at least one of the image sensor and the lens so as to vary the focal distance between the image sensor and the lens;
the apparatus being constructed and arranged to carry out an autofocus operation by:
   recording a first image at a first focal distance;
   recording a second image at a second focal distance, wherein the second focal distance is obtained by the moving arrangement moving the at least one of the image sensor and the lens to either increase the focal distance from the first focal distance or decrease the focal distance from the first focal distance;
   determining the focus quality at the first and second focal distances by processing at least a portion of the first image and at least a portion of the second image; and
   recording a third image at a third focal distance, wherein the third focal distance is obtained by:
      in the case that the second focal distance was obtained by increasing the focal distance from the first focal distance, increasing the focal distance from the second focal distance if the focus quality at the second focal distance is better than the focus quality at the first focal distance or decreasing the focal distance from the second focal distance if the focus quality at the second focal distance is worse than the focus quality at the first focal distance, and
      in the case that the second focal distance was obtained by decreasing the focal distance from the first focal distance, decreasing the focal distance from the second focal distance if the focus quality at the second focal distance is better than the focus quality at the first focal distance or increasing the focal distance from the second focal distance if the focus quality at the second focal distance is worse than the focus quality at the first focal distance.

In an example, the apparatus is constructed and arranged to carry out an autofocus operation by processing an image feature obtained from at least a portion of the image, wherein the image feature is obtained from the sharpness or the contrast of the at least a portion of the image.

In an example, the apparatus is constructed and arranged to carry out an autofocus operation wherein the amount of the change of the second focal distance to the third focal distance is determined as a function of the relation between the first image feature obtained from the first image and the second image feature obtained from the second image.

In an example, the apparatus comprises a memory for storing a change amount lookup table comprising a correspondence of a plurality of relations to a plurality of focal distance change amounts.

In an example, the apparatus is constructed and arranged to carry out an autofocus operation by selecting the final focal distance from any of the first focal distance, the second focal distance and the third focal distance.

### Brief Description of the Drawings

To assist understanding of the present disclosure and to show how embodiments may be put into effect, reference is made by way of example to the accompanying drawings in which:
Figure 1 shows schematically an example of an imaging system where the lens is moved to obtain a desired focal distance;
Figure 2 shows schematically an example of an imaging system where the image sensor is moved to obtain a desired focal distance;
Figure 3 shows schematically an example of an image recording apparatus such as a digital camera in accordance with the system;
Figure 4 shows a flow chart for a method according to an example disclosed herein for operating the apparatus shown in Figure 3.

### Detailed Description

In modern cameras the focussing process is performed by providing a proper distance between the lens and the image sensor. This may be obtained by moving the lens relative to the image sensor. For example, the lens may be moved within the camera, or the image sensor may be moved within the camera, or both may be moved, so as to adjust distance between the lens and the image sensor. The distance between the lens and the image sensor is referred to as the focal distance. The possibility of changing the focal distance provides the ability to focus on objects that are at various distances. The focal distance can be changed or adjusted by a moving arrangement attached either to the lens or to the image sensor, or even to both of them. The moving arrangement may be for example a motor, including for example an ultrasonic motor or a stepper motor.

In order to determine the correct focus for assigning a certain focal distance of the lens relative to the object and the image sensor, cameras are often provided with an autofocus algorithm to assign the proper focal distance with respect to the object to be recorded. This adjusts the positon of the lens automatically by assigning a focal distance that ensures that the light coming from the object is recorded properly directed and focused onto the image sensor.

Some autofocus systems may require to calculate the focus quality along the range of focal distances that the system allows. Such calculation along the range may require shifting the focal distance of the system by assigning focal distance over the range of focal distances that the lens allows in a discrete manner and processing the images recorded at such focal distances discretely over the distance. Such shift may be obtained by moving the lens or the image sensor. After processing the recorded images at multiple focal distances, the system determines an optimal focal distance for the scene to be taken.

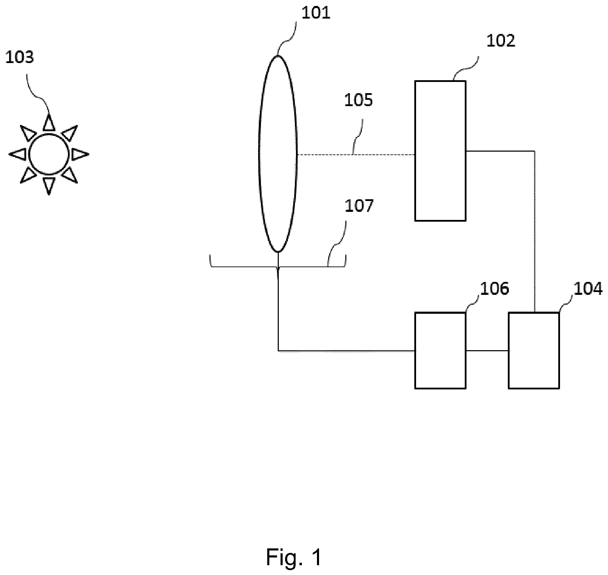

An example of an imaging system where the lens is moved to obtain a desired focal distance is shown in Figure 1. The image recording apparatus has a movable lens 101 for directing the incoming light rays onto an image sensor 102, which detects the light rays coming from the object 103 in view. The apparatus has a processor 104 for processing the image and for performing control of the autofocus operation. The processor 104 may also be used for performing overall operation of the apparatus. The focal distance is set by the processor 104 and the lens 101 is moved to the set focal distance 105 along the longitudinal axis relative to the image sensor 102. The lens 101 may be moved by a moving arrangement 106 in the range 107 as shown. The image sensor 102 may be for example a semiconductor charge-coupled device (CCD) or an active pixel sensor in complementary metal-oxide-semiconductor (CMOS) or N-type metal-oxide-semiconductor (NMOS, Live MOS) technologies.

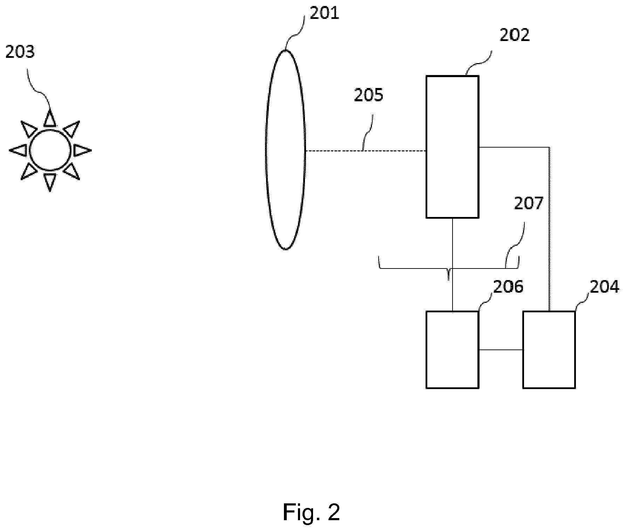

Alternatively another imaging system where the image sensor is moved to obtain a desired focal distance is shown in Figure 2. The image recording apparatus again has a lens 201 for directing the incoming light rays onto an image sensor 202, which detects the light rays coming from the object 203 in view. The apparatus has a processor 204 for processing the image and for performing control of the autofocus operation. The processor 204 may also be used performing overall operation of the apparatus. The focal distance is set by the processor 204 and the image sensor 202 is moved to the set focal distance 205 along the longitudinal axis relative to the lens 201. The image sensor 202 may be moved by a moving arrangement 206 in the range 207 as shown. Again, the image sensor 202 may be for example a semiconductor charge-coupled device (CCD) or an active pixel sensor in complementary metal-oxide-semiconductor (CMOS) or N-type metal-oxide-semiconductor (NMOS, Live MOS) technologies.

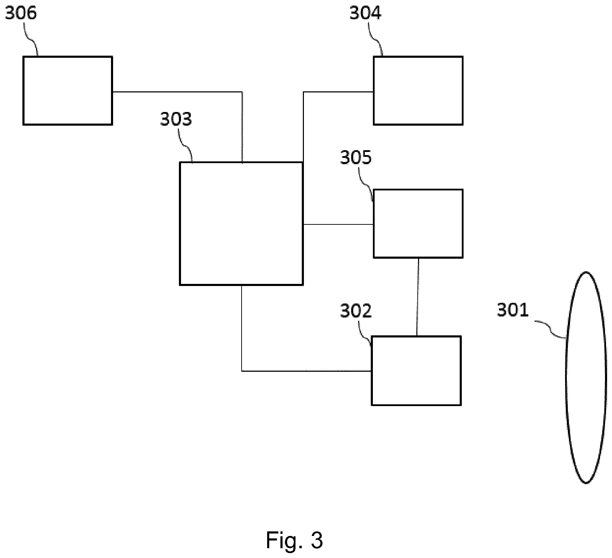

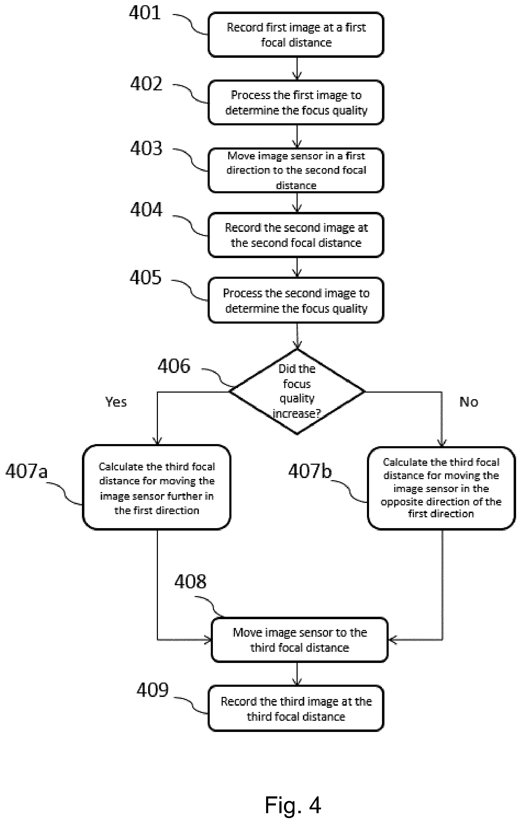

An example of an image recording apparatus, such as a digital camera, in accordance with the present disclosure is shown schematically in Figure 3. Additionally, Figure 4 shows a flow chart for a method according to an example disclosed herein for operating the apparatus shown in Figure 3.

The image recording apparatus has a lens 301, which focuses the scene by directing the light to an image sensor 302. The image sensor 302 may be some digital sensor, such as for example a semiconductor charge-coupled device (CCD) or an active pixel sensor in complementary metal-oxide-semiconductor (CMOS) or N-type metal-oxide-semiconductor (NMOS, Live MOS) technologies. The image sensor 302 supplies a signal representing the scene to a processor 303. The processor 303 processes the signal. The signal representing the scene may be stored in a memory 304.

The focal distance, i.e. the distance between the lens 301 and the image sensor 302, is set by the processor 303. Accordingly, one or both of the lens and the image sensor 302 is moved by a moving arrangement 305 to achieve the set focal distance, and the image is recorded at the set focal distance. For the rest of the description of the examples, the focal distance will be adjusted by moving the image sensor 302 relative to the body of the image recording apparatus. However, a similar effect can also be obtained by any suitable arrangement for changing the focal distance, such as moving the lens 301 relative to the body of the image recording apparatus or moving both the lens 301 and the image sensor 302, as discussed above.

When the user wants to focus the view automatically, an instruction can be given, such as by the user pressing a button 306, to the processor 303 of the image recording apparatus. The processor 303 then starts the autofocus function. This may use for example a focal sweep method. In a focal sweep method the image sensor 302 is moved to different focal distances in a discrete manner starting from an initial focal distance for the purpose of finding an optimal focus quality along the total available focal range. The focus quality is an indication of the quality of the focus of an image. In the present example, the initial focal distance might be a distance that is predetermined, such as the middle of the focal range of the image sensor 302. Alternatively the initial focal distance might be the final focal distance which was set by autofocus function that was run for an earlier scene. The initial focal distance may also be assigned for any of the focal distances that were selected during the autofocus function. In another alternative the initial focal distance might be selected among a plurality of focal distances according to the image mode that is selected by a user interface, wherein the image mode may be the mode of the camera according to the object, such as landscape, scenery, macro image, portrait, sports etc.

When the image sensor 302 is moved for focal sweep operation to obtain a plurality of focal distances in a discrete manner, the image sensor 302 records the view for each focal distance which are set discretely.

When a focal distance is set by the processor 303, the processor 303 sends signals to the moving arrangement 305 until the image sensor 302 is moved to the focal distance set by the processor 303. Accordingly the moving arrangement 305 moves the image sensor 302 to the focal distance set by the processor 303.

Accordingly at 401, when the focal distance is set by the processor 303 at a first focal distance, the image sensor 302 records the view at the first focal distance. The image signal representing the view is sent to the processor 303 as the first image for processing. The processor 303 receives the first image and processes 402 the first image for the determination of the focus quality. Alternatively the processor 303 processes a portion of the first image for the determination of the focus quality.

In an example, the processor 303 determines the focus quality by obtaining metric values from an image. In an example, the processor 303 processes the first image by calculating the sharpness of the first image. Alternatively the processor 303 may calculate the sharpness of the first image by processing a portion of the first image. Any sharpness measuring methods may be used to obtain sharpness. For example, gradient based measures, correlation based measures, statistics based measures, transform based measures or edge based measures may be used to calculate the sharpness of the first image. The measured sharpness of the first image is assigned as the first image feature and stored in the memory 304. Accordingly the first image feature is a value representing the sharpness of the first image. Alternatively the first image feature may be a vector, an array or a matrix representing the sharpness of the first image.

In another example, the processor 303 may process the first image by calculating the contrast of the first image for the determination of the focus quality. Alternatively the processor 303 may calculate the contrast of the first image by processing a portion of the first image. Any contrast measuring methods may be used to obtain contrast. For example, RMS (root mean square) contrast methods, Weber contrast methods or Michelson contrast methods may be used to calculate the contrast of the first image. The measured contrast of the first image is assigned as the first image feature and stored in the memory 304. Accordingly the first image feature is a value representing the contrast of the first image. Alternatively the first image feature may be a vector, an array, or a matrix representing the contrast of the first image.

The focal distance is changed to a second focal distance by moving 403 the image sensor 302 in a first direction to the second focal distance. In an example, the processor obtains the second focal distance by increasing the focal distance from the first focal distance. The increase of the first focal distance may be obtained by adding an absolute amount to the first focal distance. The processor 303 makes the calculation and causes the image sensor 302 to be moved. The image sensor 302 records 404 the view at the second focal distance. The image signal representing the view is sent to the processor 303 as the second image for processing. The processor 303 receives the second image. The processor 303 processes 405 the second image for the determination of the focus quality. Alternatively the processor 303 may process a portion of the second image for the determination of the focus quality.

In another example, the second focal distance is obtained by decreasing the focal distance from the first focal distance. The image sensor 302 records 404 the view at the second focal distance. The image signal representing the view is sent to the processor 303 as the second image for processing. The decrease of the first focal distance may be obtained by subtracting an absolute amount to the first focal distance by the processor 303 and moving the image sensor 302 accordingly. The processor 303 receives the second image. The processor 303 processes 405 the second image for the determination of the focus quality. Alternatively the processor 303 may process a portion of the second image for the determination of the focus quality.

In an example, the processor 303 processes 405 the second image by calculating the sharpness of the second image for the determination of the focus quality. Alternatively the processor 303 may calculate the sharpness of the second image by processing a portion of the second image. The measured sharpness of the second image is assigned as the second image feature and stored in the memory 304. Accordingly the second image feature is a value representing the sharpness of the second image. Again, alternatively the second image feature may be a vector, an array or a matrix representing the sharpness of the second image.

In another example, the processor 303 may process 405 the second image by calculating the contrast of the second image for the determination of the focus quality. Alternatively the processor 303 may calculate the contrast of the second image by processing a portion of the second image. The measured contrast of the second image is assigned as the second image feature and stored in the memory 304. Accordingly the second image feature is a value representing the contrast of the second image. Again, alternatively the second image feature may be a vector, an array, or a matrix representing the contrast of the second image.

The first image feature obtained from the first image and the second image feature obtained from the second image may be assigned as the focus quality of the first image and the focus quality of the second image respectively. Alternatively certain functions of the first image feature and the second image feature may be used in order to obtain the focus quality of an image. The calculations are made by the processor 303. After the determination of the focus quality at the first focal distance and the focus quality at the second focal distance using the first image feature and the second image feature, the processor 303 determines 406 if the focus quality is increased or decreased when the focal distance is changed from the first focal distance to the second focal distance.

In an example when the focus quality of the first image is better than the focus quality of the second image, this suggests that the focus quality has increased. Alternatively when the focus quality of the first image is worse than the focus quality of the second image, this suggests that the focus quality has decreased.

Then the focal distance is changed to a third focal distance by moving the image sensor 302. The third focal distance is calculated by the processor in relation to the previous movement of the image sensor 302, the focus quality at the first focal distance and the focus quality at the second focal distance.

In the case that the second focal distance was obtained by increasing the focal distance from the first focal distance, the third focal distance is calculated by the processor 303 by increasing the focal distance from the second focal distance if the focus quality at the second focal distance is better than the focus quality at the first focal distance. That is, if the focus quality at the second focal distance is better than the focus quality at the first focal distance, this suggests that the focus quality increased as the image sensor 302 moved in a first direction from the first focal distance to the second focal distance. In this case, the processor 303 calculates 407a the third focal distance for moving the image sensor 302 further in the first direction from the second focal distance.

On the other hand, in the case that the second focal distance was obtained by increasing the focal distance from the first focal distance, the third focal distance is calculated by the processor 303 by decreasing the focal distance from the second focal distance if the focus quality at the second focal distance is worse than the focus quality at the first focal distance. That is, if the focus quality at the second focal distance is worse than the focus quality at the first focal distance, this suggests that the focus quality decreased as the image sensor 302 moved in the first direction from the first focal distance to the second focal distance. The processor 303 calculates 407b the third focal distance for moving the image sensor 302 in the opposite direction of the first direction from the second focal distance.

The direction of the movement of the image sensor 302 from the second focal distance to the third focal distance is calculated by the processor 303 relative to the movement of the image sensor 302 from the first focal distance to the second focal distance depending on whether the focus was determined to have improved or got worse on going from the first focal distance to the second focal distance. Therefore in general it is not important for the present disclosure in which direction is the movement of the image sensor 302 from the first focal distance to the second focal distance. Accordingly the processor 303 may also calculate 407b the third focal distance in a similar fashion, if the movement of the image sensor 302 from the first focal distance to the second focal distance is towards the opposite direction of the movement of the image sensor 302.

In the case that the second focal distance was obtained by decreasing the focal distance from the first focal distance, the third focal distance is calculated by the processor 303 by decreasing the focal distance from the second focal distance if the focus quality at the second focal distance is better than the focus quality at the first focal distance. That is, if the focus quality at the second focal distance is better than the focus quality at the first focal distance, this suggests that the focus quality increased as the image sensor 302 moved in a second direction, which is the opposite of the first direction, from the first focal distance to the second focal distance. The processor 303 calculates 407a the third focal distance for moving the image sensor 302 further in the second direction from the second focal distance.

On the other hand, in the case that the second focal distance was obtained by decreasing the focal distance from the first focal distance, the third focal distance is calculated by the processor 303 by increasing the focal distance from the second focal distance if the focus quality at the second focal distance is worse than the focus quality at the first focal distance. That is, if the focus quality at the second focal distance is worse than the focus quality at the first focal distance, this suggests that the focus quality decreased as the image sensor 302 moved in the second direction from the first focal distance to the second focal distance. The processor 303 calculates the third focal distance for moving the image sensor 302 in the opposite direction of the second direction from the second focal distance.

In an example, the amount of the change of the focal distance for moving the image sensor 302 from the first focal distance to the second focal distance is arranged to be a first value. Assigning the first value also for the amount of the change of the focal distance for moving the image sensor 302 from the second focal distance to the third focal distance may make the first focal distance and the third focal distance equal, in case the third focal distance is calculated for moving the image sensor 302 in the opposite direction of the first direction. Thus in an example the amount of the change of the focal distance for moving the image sensor 302 from the first focal distance to the second focal distance is different from the amount of the change of the focal distance for moving the image sensor 302 from the second focal distance the third focal distance. This would be especially an issue when the desired focus quality is between the first focal distance and the second focal distance. Accordingly the image sensor 302 is not moved back to the same focal distances and the autofocus function does not go into a loop in this example.

In order to provide such difference in the change amount, at least the amount of the change from the first focal distance to the second focal distance is stored in the memory 304. Alternatively all previously determined change amounts may be stored in the memory 304.

The difference in the change amount from the second focal distance to the third focal distance may be less or greater than the change amount from the first focal distance to the second focal distance. A greater change amount may help finding the proper focal distance in an approximate but quicker manner. Alternatively a lesser change amount may help pinpoint the focal distance, when the approximate area of the proper focal distance is determined.

As an example the processor 303 determines the amount of the change of the second focal distance to the third focal distance in response to the focal distance at that instance, or as a function to the relation between the first image feature obtained from the first image and the second image feature obtained from the second image. A number of relations between the first image feature and the second image feature can be used.

For example, the processor 303 may calculate the tangential slope of the first image feature to the second image feature for determining the amount of the change of the second focal distance to the third focal distance. The tangential slope of the first image feature to the second image feature may be calculated by obtaining the difference of the first image feature and the second image feature. The difference of the first image feature and the second image feature may be divided by the absolute difference of the first focal distance and the second focal distance.

In this context, a negative value of the tangential slope would provide information that the focus quality is decreased. The value itself would also provide information regarding how much the focus has changed in terms of being better or worse. A relatively small change and small sharpness or contrast values points out that the optimal focus point is far away and the change amount should be relatively great.

A numerical example to illustrate this might be that the first image feature and the second image feature are normalized and they are around 0.1 when the first focal distance is at the beginning point (0) of the total available focal range and the second focal distance is at 0.05 of the focal range. The amount of the change of the second focal distance to a third focal distance can be set to 0.2 of the focal range, which assigns the third focal distance to be 0.25 of the focal range. Accordingly the amount of the change of the second focal distance to the third focal distance is selected to be 4 times the amount of the change of the first focal distance to the second focal distance. This is because the first image feature and the second features are similar and have relatively low values and so are far from the expected image features for obtaining a proper focus.

Another numerical example might be that the first image feature and the second image feature are normalized. Assume that the first image feature is 0.83 and the second image feature is 0.82 when the first focal distance is at 0.50 of the focal range and the second focal distance is at 0.52 of the focal range. The amount of the change of the second focal distance to a third focal distance can be set to 0.01 of the focal range, and decreased from the second focal distance, which assigns the third focal distance to 0.51 of focal range. Accordingly the amount of the change of the second focal distance to the third focal distance is selected to be half the amount of the change of the first focal distance to the second focal distance. This is because the first image feature and the second features are similar and have relatively high values and so are close to the expected image features for obtaining proper focus.

In an example the relation between the first image feature and the second image feature can be calculated by a function which provides the information with respect to the relation or the correlation of the first image feature and the second image feature.

In an example, in order to provide the correspondence between the relation of the first image feature and the second image feature and the amount of the change, a predetermined change amount lookup table is stored in the memory 304. The change amount lookup table comprises the correspondence of a plurality of relations to a plurality of focal distance shifting amounts.

Accordingly when the relation between the first image feature and the second image feature provides an indication that the desired focus quality should be around the vicinity of the second focal distance, the change amount lookup table provides the amount of the change at a relatively smaller amount, in order to keep the third focal distance close to the desired focus quality. As an example, such indication may be obtained by high sharpness values.

Alternatively the relation between the first image feature and the second image feature may provide an indication that the desired focus quality is far from the vicinity of the second focal distance. In that case, the change amount lookup table may provide the amount of the change at a relatively larger amount, in order to bring the third focal distance close to the desired focus quality. As an example, such indication may be obtained by low sharpness values.

In an example, the processor 303 selects a change amount lookup table from a plurality of change amount lookup tables according to the image mode. The image mode may be selected by the user. It is possible that the different image modes may exploit different change amount lookup tables which are predetermined according to different image modes due to their nature. An exemplary case might be that a landscape view may have an optimal focal distance on one side of the focal range, while a macro view would have an optimal focal distance on the other side of the focal range. The change amount lookup tables can be arranged so that they have characteristic correspondences for the amount of the change for different image modes.

After determining the third focal distance, the image sensor 302 is moved to the third focal distance at 408. The amount of the change for moving the image sensor 302 from the second focal distance to the third focal distance may be provided by the processor 303 in accordance with the relation between the first image feature and the second image feature, as discussed above. The third image is recorded at the third focal distance accordingly at 409.

The focus quality at the third focal distance may be determined by processing the third image or at least a portion of the third image similar to the methods for the determination of the focus quality as discussed above. Alternatively the focus quality is determined by using n image features, wherein the amount of n is greater than two, as mentioned above. The present disclosure may continue in a similar fashion by recording images at different focal distances and determining the focus qualities at the respective focal distances for selecting a final focal distance for taking the photograph of the view and storing the image to the memory 304. The determined focus qualities may be stored in the memory 304 or alternatively at least the best focus quality among the previously determined focus qualities is stored in the memory 304. The amount of the change of the images and the direction of the change is determined by the focus quality as defined above.

The selection of the final focal distance for taking the photograph of the view can be made using any known methods. An example might be that the processor 303 compares the quality of focus at focal distances using the focus quality with a predetermined decision metric value stored in the memory 304 as a threshold value. When the focus quality is above the threshold, the processor 303 may stop the autofocus function by assigning the focal distance providing the focus quality above the threshold as the final focal distance. The view is then recorded to the memory 304.

Alternatively when the user sends an instruction for taking the photograph of the view during the autofocus function, the processor 303 may receive the instruction and it may stop the autofocus function by assigning the focal distance that has the highest focus quality among the previously determined focus qualities during the execution of the autofocus function as the final focal distance. The image sensor 302 is moved to the final focal distance and the photograph of the view is taken.

It will be understood that the processor referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to memory. This may be provided by a semiconductor memory, or single chip or integrated circuit or plural chips or integrated circuits, optionally provided as a chipset, or single device or by plural devices. Suitable devices include for example a RAM, DRAM, SRAM a hard disk and non-volatile semiconductor memory (e.g. a solid-state drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method for recording an image, the method comprising:
recording a first image at a first focal distance, wherein the focal distance is the distance between a lens and an image sensor which captures images;
recording a second image at a second focal distance, wherein the second focal distance is obtained by either increasing the focal distance from the first focal distance or decreasing the focal distance from the first focal distance;
determining the focus quality at the first and second focal distances by processing at least a portion of the first image and at least a portion of the second image; and
recording a third image at a third focal distance, wherein the third focal distance is obtained by:
in the case that the second focal distance was obtained by increasing the focal distance from the first focal distance, increasing the focal distance from the second focal distance if the focus quality at the second focal distance is better than the focus quality at the first focal distance or decreasing the focal distance from the second focal distance if the focus quality at the second focal distance is worse than the focus quality at the first focal distance, and
in the case that the second focal distance was obtained by decreasing the focal distance from the first focal distance, decreasing the focal distance from the second focal distance if the focus quality at the second focal distance is better than the focus quality at the first focal distance or increasing the focal distance from the second focal distance if the focus quality at the second focal distance is worse than the focus quality at the first focal distance.

2. The method of claim 1, wherein determining the focus quality of an image comprises processing an image feature obtained from the at least a portion of the image.

3. The method of claim 2, wherein the image feature is obtained from the sharpness or the contrast of the at least a portion of the image.

4. The method of claim 2 or claim 3, wherein the amount of the change of the second focal distance to the third focal distance is determined as a function of the relation between the first image feature obtained from the first image and the second image feature obtained from the second image.

5. The method of claim 4, wherein the relation between the first image feature and the second image feature is obtained from the difference of the first image feature and the second image feature and the difference of the first focal distance and the second focal distance.

6. The method of claim 4 or claim 5, wherein the amount of the change of the second focal distance to the third focal distance is determined using a change amount lookup table comprising a correspondence of a plurality of relations to a plurality of focal distance change amounts.

7. The method of claim 6, wherein the change amount lookup table is selected from a plurality of change amount lookup tables in response to an image mode selected for recording the image.

8. The method of any of claims 1 to 7, wherein the amount of the change of the second focal distance to the third focal distance is greater than the amount of the change of the first focal distance to the second focal distance.

9. The method of any of claims 1 to 8, wherein the method comprises selecting the final focal distance from any of the first focal distance, the second focal distance and the third focal distance.

10. The method of any of claims 1 to 9, wherein the final focal distance is selected as the focal distance that has the highest focus quality.

11. Apparatus for recording an image, the apparatus comprising:
an image sensor for capturing images;
a lens for focussing incident light onto the image sensor;
a moving arrangement constructed and arranged to move at least one of the image sensor and the lens so as to vary the focal distance between the image sensor and the lens;
the apparatus being constructed and arranged to carry out an autofocus operation by:
recording a first image at a first focal distance;
recording a second image at a second focal distance, wherein the second focal distance is obtained by the moving arrangement moving the at least one of the image sensor and the lens to either increase the focal distance from the first focal distance or decrease the focal distance from the first focal distance;
determining the focus quality at the first and second focal distances by processing at least a portion of the first image and at least a portion of the second image; and
recording a third image at a third focal distance, wherein the third focal distance is obtained by:
in the case that the second focal distance was obtained by increasing the focal distance from the first focal distance, increasing the focal distance from the second focal distance if the focus quality at the second focal distance is better than the focus quality at the first focal distance or decreasing the focal distance from the second focal distance if the focus quality at the second focal distance is worse than the focus quality at the first focal distance, and
in the case that the second focal distance was obtained by decreasing the focal distance from the first focal distance, decreasing the focal distance from the second focal distance if the focus quality at the second focal distance is better than the focus quality at the first focal distance or increasing the focal distance from the second focal distance if the focus quality at the second focal distance is worse than the focus quality at the first focal distance.

12. The apparatus of claim 11, wherein the apparatus is constructed and arranged to carry out an autofocus operation by processing an image feature obtained from at least a portion of the image, wherein the image feature is obtained from the sharpness or the contrast of the at least a portion of the image.

13. The apparatus of claim 12, wherein the apparatus is constructed and arranged to carry out an autofocus operation wherein the amount of the change of the second focal distance to the third focal distance is determined as a function of the relation between the first image feature obtained from the first image and the second image feature obtained from the second image.

14. The apparatus of claim 13, wherein the apparatus comprises a memory for storing a change amount lookup table comprising a correspondence of a plurality of relations to a plurality of focal distance change amounts.

15. The apparatus of any of claims 11 to 14, wherein the apparatus is constructed and arranged to carry out an autofocus operation by selecting the final focal distance from any of the first focal distance, the second focal distance and the third focal distance.
